# EUROPEAN PATENT APPLICATION

(11) **EP 4 674 906 A1**
(43) Date of publication of application: **07.01.2026**
(21) Application number: 24186890.0
(22) Date of filing: 05.07.2024
(51) Int. Cl.: C08K 3/22, C08K 5/00, C08K 5/521, C08K 5/5425, C08K 5/544, C08L 71/02, C08L 101/10, H01M 10/653

(54) **CURABLE SILANE-TERMINATED POLYMER COMPOSITION WITH HIGH THERMAL CONDUCTIVITY AND ENHANCED DIMENSIONAL STABILITY**

(71) Applicant: Sika Technology AG, 6340 Baar (CH)
(72) Inventor: ASCHWANDEN, Marcel, 8048 Zürich (CH); BANDERA, Davide, 8048 Zürich (CH); BATTISTI, Andrea, 8048 Zürich (CH); OERTLI, Marcel, 8048 Zürich (CH); THÖNY, Debora, 8048 Zürich (CH)
(74) Representative: Sika Patent Attorneys

(57) **Abstract**

The invention relates to a curable silane-terminated polymer composition with high thermal conductivity and enhanced dimensional stability to accommodate for battery breathing, comprising at least one organic polymer **P** containing reactive silane groups, wherein the reactive silane groups correspond to dialkoxy(alkyl) silanes, and at least 70 wt.-% of thermally conductive filler **F** and at least one plasticizer **PL** and at least one catalyst **C.**

The inventive curable composition is especially suitable as an adhesive, sealant or gap filler for batteries and other electronic equipment, especially in the automotive industry.

## Description

### Technical Field

The invention relates to curable compositions based on silane-functional polymers and their use as thermally conductive adhesive, sealants, or gap-fillers.

### Prior Art

Compositions based on polymers containing reactive silane groups play an important role in many industrial applications, for example as adhesives, sealants, gap fillers or coatings. Polymers containing reactive silane groups are in particular organic polymers containing reactive silane groups, which are also referred to as "silane-functional polymers", "silane-modified polymers" (SMP) or "silane-terminated polymers" (STP). Compositions containing these polymers harden via crosslinking reactions of the reactive silane groups on the polymers, which hydrolyze under the influence of moisture, condense with one another as silanol groups and thus form a covalently bonded network and, macroscopically, a cured material.

With the increasing use of batteries and electronic equipment nowadays, the demand for suitable adhesives, sealants, and gap fillers in contact with these electronic elements or devices has risen significantly. Especially in electric automobile assembly, large batteries and a multitude of electronic parts require large amounts of such compositions that cover, seal, or bond electronics and batteries directly.

A particular requirement for these compositions is high thermal conductivity because batteries and electronics generate significant amounts of heat while operating that must be dissipated efficiently to prevent detrimental heat accumulation on the batteries and electronic parts.

This aspect has proven to be a severe problem for traditionally used compositions based on silane-functional polymers. Commonly known, such compositions possess a poor thermal conductivity and rather act as thermal insulators than efficient heat conductors. There have been several attempts to formulate compositions with high thermal conductivity. Commonly used are silane-functional polymer compositions with special fillers. These marketed compositions are curable and show adequate thermal conductivity.

Besides the conduction of heat, there is also the need of mechanical load transfer between the battery pack and the battery cells, in order to reinforce the structure. Furthermore, the so-called "battery breathing", i.e. the tendency of a battery cell to exhibit dimensional variations (expansions and contractions) during a charge and discharge cycle, poses another challenge to these adhesive or gap filler compositions that are in contact with the battery. The expansion is only partially reversible and thus the battery often swells over time. Over the lifecycle of a battery, the expansion can build up to 200% shear deformation in the adhesive layer.

Thus, it remains challenging to create a curable composition which fulfills the requirements of high thermal conductivity and adequate mechanical properties and the ability to comply with deformations caused by battery breathing. The current state of the art does not offer easy solutions to this problem.

### Summary of the Invention

It is therefore an object of the present invention to provide a curable composition, based on organic polymers containing reactive silane groups, with high thermal conductivity and adequate mechanical properties and the ability to comply with deformations caused by battery breathing, that is suitable as adhesives, sealant and gap filler for batteries and other electronic equipment, especially in the automotive industry.

The present invention achieves these aforementioned objects with the features of independent claim 1.

### Ways of executing the invention

The present invention relates in a first aspect to a curable composition comprising
- at least one organic polymer **P** containing reactive silane groups, wherein the reactive silane groups correspond to dialkoxy(alkyl) silanes;
- at least 70 wt.-% of a thermally conductive filler **F;**
- at least one plasticizer **PL;**
- at least one catalyst **C.**

Further aspects of the invention are the subject of further independent claims. Particularly preferred embodiments of the invention are the subject of the dependent claims.

Substance names beginning with "poly", such as polyol or polyisocyanate, refer here to substances which formally contain per molecule two or more of the functional groups appearing in their name.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

The term "silane" or "organosilane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

The term "radical" is used in this document in a formal sense, meaning a molecular rest bound to an atom by a covalent bond, while the bond is formally "cut" to describe the molecular rest attached to it.

Correspondingly, the term "silane group" identifies the silicon-containing group bonded to the organic radical of the silane, which is bonded by the Si-C bond to a compound. The silanes and their silane groups have the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

In the present document, the term "reactive silane group" refers to a silyl group that is bonded to an organic radical and has up to three hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or preferably end groups. Silane-functional polymers are also referred to as silane-terminated polymers (STP). γ-silane-functional polymers are polymers in which the Si atom of the silane group is linked to the polymer via a 1,3-propylene bridge.

"Aminosilanes", "isocyanatosilanes", and "mercaptosilanes" are organosilanes whose organic radical has at least one amino group, at least one isocyanate group, and at least one mercapto group, respectively. "Primary aminosilanes" are aminosilanes which have a primary amino group, i.e., an NH₂ group which is bonded to an organic radical. "Secondary aminosilanes" are aminosilanes which have a secondary amino group, i.e., an NH group which is bonded to two organic radicals.

"Polyoxyalkylene radical" refers to a linear or branched hydrocarbyl radical which contains ether groups and contains more than two repeat units of the (OR) type in succession, where R is a linear or branched alkylene radical, as for example from the polyaddition of ethylene oxide or 1 ,2-propylene oxide onto starter molecules having two active hydrogen atoms.

The term "polyether containing reactive silane groups" also encompasses organic polymers which contain silane groups and which, in addition to polyether units, may also contain urethane groups, urea groups or thiourethane groups. Such polyethers containing reactive silane groups may also be referred to as "polyurethanes containing reactive silane groups".

The term "room temperature" refers here to a temperature of 23±1 °C.

The term "standard climatic conditions" refers to a temperature of 23±1 °C and a relative air humidity of 50±5%.

"Molecular weight" of oligomers or polymers is understood as the average molecular weight of their chain length distribution. "Average molecular weight" is understood herein to mean the number-average Mₙ of an oligomeric or polymeric mixture of molecules or radicals, which is typically determined by means of gel permeation chromatography (GPC) against polystyrene as standard.

"Weight percent" or "percentage by weight", and its abbreviation "wt.-%" refer to the weight percentage of a certain compound in a total composition, if not otherwise defined. The terms "weight" and "mass" are used interchangeably in this document and refer to the mass as a property of a physical body and commonly measured in kilograms (kg).

The polydispersity can be established by a method known per se to the person skilled in the art, by determining both the number-average molecular weight (Mₙ) and the weight-average molecular weight (M_{w}) by gel permeation chromatography (GPC) using polystyrene as standard, if not specified otherwise. The polydispersity is calculated as PD = M_{w}/Mₙ.

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

A dotted line in the formulae in this document in each case represents the bond between a substituent and the corresponding molecular radical.

The term "does not contain polydiorganosiloxanes" means that no such compounds have been added during formulation of the composition. If traces of such species are unknowingly and/or unavoidably present, for example stemming from the synthesis of the silane-functional polymer or due to condensation reactions of silane-functional diorganosilane compounds possibly present in the composition, these are not considered as polydiorganosiloxanes in the meaning of this term. In simpler words, the term "does not contain polydiorganosiloxanes" means that no silicone oils or reactive silicone polymers, in particular polydimethylsiloxanes, were added during formulation of the composition.

Thermal conductivity λ is defined as ability of material to transmit heat and it is measured in watts per square metre (W/m²) of surface area for a temperature gradient of 1 K per unit thickness of 1 m. Thermal conductivity of materials disclosed in this document are measured according to ASTM D5470-06.

A "thermally conductive filler" within the meaning of this document is a filler that when formulated in a weight ratio of 70% together with 20 wt.-% organic polymer P and 9.98 % plasticizer **PL** and 0.02 catalyst **C,** the cured material exhibits a thermal conductivity, measured according to ASTM D5470, of at least 1.5 W/mK, preferably at least 2.5 W/mK, most preferably 3 W/mK.

The curable compositions comprising the silane-functional polymer are moisture-curing, meaning that in the presence of water or moisture, more particularly atmospheric moisture, the above-described hydrolysis and condensation reactions on the silane groups take place, causing crosslinking of the polymer molecules and curing of the sealant. The curing is also referred to as crosslinking.

STP compositions can be formulated as one-component or two-component curable compositions. One-component STP compositions have the advantage that they do not need to be mixed before or during application and are therefore more popular in many applications, and users of these processes appreciate the simpler and more error-resistant application of one-component STP compositions. Two-component STP compositions on the other hand are generally more storage-stable, and, when they contain water, offer a faster curing with more homogeneous deep cure. This is often advantageous in industrial applications.

One-component STP compositions cure by reacting the silane groups with moisture, usually atmospheric moisture, whereby curing takes place by diffusion of water from the outside to the inside of the applied adhesive. The silane groups thus hydrolyze to silanol groups which then undergo condensation reactions with other silanes or silanols.

A two-component STP composition refers to a composition in which the constituents of the composition are present in two different components which are stored in separate containers. Normally, the reactive species, i.e. organic polymer **P** is stored in the first component **A,** and water is present in the second component **B.** Only shortly before or during the application of the composition are the two components mixed with one another, whereupon the mixed composition cures under the action of water from the second component and, less importantly but additionally, moisture from air humidity.

In the case of a two-component composition, it is still preferable to dry the filler **F** in the first component to ensure storage stability. The fillers **F** of the second component, however, do not have this restriction. The water in second component can, in principle, stem from the undried fillers and no water as such needs to be added.

In one-component compositions, all constituents including filler should be as dry as possible to ensure storage stability of the compositions.

All industrial standards and norms cited in this document refer to the respective edition in force on the time of filing of the first application of this invention, if not otherwise defined.

The curable composition comprises at least one organic polymer **P** containing reactive silane groups, wherein the backbone of the organic polymer **P** is a polyether, in particular a polyoxyalkylene, a polyurethane, including a polyether-polyurethane and a polyester-polyurethane, a polyurea, including a polyether-polyurea and a polyester-polyurea, a polyisocyanurate, a polycarbodiimide and a poly(meth)acrylate.

Preferably, the backbone of the organic polymer **P** is a polyether, in particular a polyoxyethylene, polyoxypropylene or polyoxypropylene-polyoxyethylene, a polyurethane, a poly(meth)acrylate or a polybutadiene.

The curable composition comprises at least one organic polymer **P** containing reactive silane groups, wherein the reactive silane groups correspond to dialkoxy(alkyl) silanes according to formula (I) 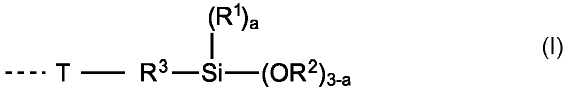 wherein
R¹ is a linear or branched, monovalent hydrocarbyl radical having 1 to 8 carbon atoms, preferably methyl or ethyl, most preferably methyl;
R² is a linear or branched, monovalent hydrocarbyl radical having 1 to 6 carbon atoms, preferably methyl or ethyl or isopropyl, most preferably methyl;
R³ is a linear or branched divalent hydrocarbyl radical which has 1 to 12 carbon atoms and optionally has cyclic and/or aromatic moieties and optionally one or more heteroatoms, especially one or more nitrogen atoms, preferably methyl or ethyl or propyl, most preferably propyl;
T is a divalent radical selected from -O-, -S-, -N(R⁵)-, -O-CO-N(R⁵)-, - N(R⁵)-CO-O- and N(R⁵)-CO-N(R⁵)- ;
wherein R⁵ is a hydrogen radical or linear or branched hydrocarbyl radical
which has 1 to 20 carbon atoms and optionally has cyclic moieties, and which optionally has an alkoxysilane, ether or carboxylic ester group;
a has a value of 1.

When R³ from formula (I) is a methyl, the corresponding reactive silane group is called an α-silane. When R³ from formula (I) is a propyl, the corresponding reactive silane group is called a γ-silane.

Processes for preparing organic polymer **P** containing reactive silane groups are known to the person skilled in the art.

In a preferred process, organic polymers **P** containing reactive silane groups are obtainable from the reaction of organic polymers containing vinyl or allyl groups with hydrosilanes.

In a further preferred process, the organic polymer **P** is a silane-functional polyurethane polymer which is obtainable by the reaction of a silane having at least one group that is reactive toward isocyanate groups with a polyurethane polymer which contains isocyanate groups. This reaction is carried out preferably in a stochiometric ratio of the groups that are reactive toward isocyanate groups to the isocyanate groups of 1:1, or with a slight excess of groups that are reactive toward isocyanate groups, and so the resulting silane-functional polyurethane polymer is entirely free from isocyanate groups. The silane which contains at least one group that is reactive toward isocyanate groups is, for example, a mercaptosilane or an aminosilane, more particularly an aminosilane. This process enables the use of a multitude of inexpensive starting materials of good commercial availability, by means of which it is possible to obtain different polymer properties, for example high extensibility, high strength, low modulus of elasticity, low glass transition point or high weathering resistance.

In a most preferred process, organic polymers **P** containing reactive silane groups are obtainable from the reaction of organic polyols with isocyanatosilanes, optionally with chain extension using diisocyanates. In a particularly preferred embodiment, this reaction is carried out preferably in a stochiometric ratio of isocyanatosilanes to hydroxyls of the polyols of 1:1, or with a slight molar excess of hydroxyl groups. This process has the advantage of producing organic polymers **P** containing reactive silane groups with lower viscosity compared to polymer produced using the process above involving isocyanate-functional prepolymers. Thus, it is possible to formulate compositions with a high amount of filler. Particularly preferred isocyanatosilanes are in particular γ-silanes, because the then cured material features particularly high dimensional stability and thus is able to accommodate battery breathing very well.

In a preferred embodiment, the organic polymer **P** is a γ-silane-terminated polymer.

Examples of suitable polyurethane polymer containing isocyanate groups for producing a silane-functional polyurethane organic polymer **P** are polymers obtainable by the reaction of at least one polyol with at least one polyisocyanate, more particularly a diisocyanate. This reaction may be accomplished by bringing the polyol and the polyisocyanate to reaction with customary methods, as for example from temperatures of 50°C to 100°C, optionally with accompanying use of suitable catalysts, the polyisocyanate being metered such that these isocyanate groups are in a stochiometric excess in relation to the hydroxyl groups of the polyol.

Suitable polyols for preparing the polyurethane polymer and/or for reacting with isocyanatosilanes are, in particular, polyether polyols, polyester polyols, and polycarbonate polyols, and also mixtures of these polyols. Particularly suitable are polyoxyethylene polyols and polyoxypropylene polyols, more particularly polyoxyethylene diols, polyoxypropylene diols, polyoxyethylene triols, and polyoxypropylene triols.

Especially suitable are polyoxyalkylene diols or polyoxyalkylene triols having a degree of unsaturation of less than 0.02 meq/g and having a number-average molecular weight Mₙ in the range from 1'000 to 30'000 g/mol.

Likewise particularly suitable are so-called ethylene oxide-terminated ("EO-endcapped") polyoxypropylene polyols. These stated polyols preferably have a number-average molecular weight Mₙ of 250 to 30'000 g/mol and an average OH functionality in the range from 1.6 to 3.

The proportion of the organic polymer **P** in the composition may vary within wide ranges. Preferably the organic polymer **P** is present in the composition in a proportion for example of 1 to 25 wt.-%, preferably of 2 to 15 wt.-%, more preferably of 5 to 13 wt.-%, based on the total weight of the composition.

The curable composition according to the invention comprises at least one filler **F,** wherein the filler is thermally conductive. The thermally conductive filler **F** influences not only the rheological properties of the uncured composition but also the mechanical properties and the surface quality of the cured composition.

The curable composition according to the invention comprises a thermally conductive filler **F,** characterized in that the filler **F** comprises or consists of aluminium oxide, aluminium hydroxide, boron nitride, aluminium nitride, zinc oxide, magnesium oxide, magnesium hydroxide and any mixture of these fillers.

It is preferred in some embodiments to use more than one type of thermally conductive filler **F,** for example aluminium oxide and aluminium hydroxide. By mixing different fillers, thermal conductivity properties may be maximized and/or other properties, such as dielectricity, density, mechanical properties, or flame-retardant properties may be improved.

In the same or different preferred embodiments, a thermally conductive filler **F** or a mixture of fillers **F** is used that combines different particle sizes. For example, it is advantageous to use a bimodal or multimodal particle size range for the employed fillers. When at least one filler ensemble with relatively large particles and at least another one with relatively small particles are used together, a higher density of close packing of spheres may be achieved, which is beneficial for heat conductivity and compounding when using small amounts of polymer **P** and high amounts of filler **F.**

In a preferred embodiment, the curable composition according to the invention comprises a thermally conductive filler **F**, characterized in that said filler **F** comprises or consists of a multimodal aluminium hydroxide, preferably having a hydrophobic coating. This type of filler **F** combines the advantages of excellent flame retardant properties and excellent thermal conductivity due to the possible high amounts that can be incorporated in the composition.

The total amount of thermally conductive filler **F** in the curable composition is at least 70 wt.%, but may vary within ranges, for example 70 to 95 wt.-%, preferably 80 to 92 wt.-%, most preferably 85 to 90 wt.-%, based on the overall composition.

In preferred embodiments of the curable composition according to present invention, thermally conductive filler **F** comprises or consists of aluminium oxide and aluminium hydroxide (ATH). This combination has the advantage that it shows especially good thermal conductivity and at the same time excellent flame-retardant properties. This makes it especially suitable for battery assemblies. Even more advantageous in this regard is the combination of fillers **F** comprising or consisting of ATH with flame-retardant plasiticizers **PL** such as trialkyl or triaryl phosphates discussed further below.

For example, thermal conductivity can be increased by adding a more thermally conductive filler **F.** For example, the thermal conductivity of suitable fillers **F** rises from ATH < Al₂O₃ < MgO < BN. The choice of suitable fillers F or their mixture is however preferably limited to highly dielectric fillers, especially in electric or electronic applications where dielectric properties are a safety requirement.

The thermally conductive filler **F** is in all embodiments advantageously added in powder form or at least finely particulate, in order to ensure homogeneous compounding when used in high amounts.

The curable composition comprises at least one plasticizer **PL,** characterized in that the plasticizer **PL** preferably comprises or consists of reactive diluent and/or trialkyl and/or triaryl phosphate, most preferably tris-(2-ethylhexyl)-phosphate.

Plasticizer **PL** may be any of the plasticizers commonly used in compositions based on isocyanate-functional polymers. These include, for example, carboxylic esters such as phthalates, especially dioctyl phthalate, bis(2-ethylhexyl) phthalate, bis(3-propylheptyl) phthalate, diisononyl phthalate or diisodecyl phthalate, diesters of ortho-cyclohexane-dicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel".

Also suitable are polymeric plasticizers. These have the advantage of lower migration tendency into surrounding areas and lower contribution to VOC levels. The term "polymeric plasticizer" herein means a polymeric additive that is liquid at room temperature and contains no hydrolyzable silane groups. In contrast to traditional plasticizers, such as phthalates, the polymeric plasticizers generally have a higher molecular weight. Preferably, the polymeric plasticizer has an average molecular weight Mₙ of 500 to 12'000 g/mol, in particular 1'000 to 10'000 g/mol, more preferably 2'500 to 5'000 g/mol.

Suitable polymeric plasticizers include polyols, such as those suitable for the production of polymers **P** mentioned there, as long as they are liquid at room temperature, and polyols where the OH-groups have been reacted to chemically inert functional groups. Preferred polyols suitable as polymeric plasticizers include polyether polyols, polyester polyols, polyhydrocarbon polyols, polybutadiene polyols, and poly(meth)acrylate polyols. Particularly preferred are polyether polyols, especially those with an average molecular weight of Mₙ of 500 to 12'000 g/mol, especially 1'000 to 10'000 g/mol, more preferably 2'500 to 5'000 g/mol.

Preferred plasticizers **PL** for the curable composition according to the present invention comprise or consist of a trialkyl and/or triaryl phosphate, for example triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates. Preferred trialkyl and/or triaryl phosphate plasticizers **PL** are tris-(2-ethylhexyl)-phosphate (sold under the trade name Disflamoll^{®} TOF by Lanxess), cresyl diphenyl phosphate, tricresyl phosphate, and triphenyl phosphate (all sold under the trade name range Disflamoll^{®} by Lanxess). Trialkyl and/or triaryl phosphate plasticizers have the advantage that they improve the flame-retardant properties of the composition. Most preferred plasticizer is tris-(2-ethylhexyl)-phosphate.

Most preferably, the plasticizer **PL** comprises or consists of reactive diluents. Such reactive diluents are especially polyether-based silane-terminated polymers, such as commercialy available Geniosil^{®} XM20 or Geniosil^{®} XM25 from Wacker. Reactive diluents herein are characterized by their high reactivity and hydrolyze in the presence of moisture.

In preferred embodiments of the curable composition according to the present invention, the composition comprises between 1 to 20 wt.-%, preferably 1 to 15 wt.-%, most preferably 2 to 10 wt.-% of said plasticizer **PL,** based on the total composition.

The curable composition according to the invention comprises at least one catalyst **C,** characterized in that the catalyst **C** is a metal compound and/or a basic nitrogen and/or phosphorus compound, preferably organotin(IV) compounds.

The addition of catalyst **C** is advantageous in some embodiments to ensure a sufficient curing rate given the fact that generally low amounts of reactive polymers **P** are used. Also, the amount of catalyst, when used, may be tailored to the intended curing rate of a specific embodiment of the inventive curable composition, as higher amounts of catalyst generally lead to faster curing rates.

Suitable catalysts **C** are all commonly used curing catalysts for STP compositions known to the person skilled in the art, especially metal compounds and/or basic nitrogen or phosphorus compounds.

Suitable metal compounds as catalysts **C** are especially compounds of tin, titanium, zirconium, aluminum or zinc, especially diorganotin(IV) compounds such as, in particular, dibutyltin(IV) diacetate, dibutyltin(IV) dilaurate, dibutyltin(IV) dineodecanoate or dibutyltin(IV) bis(acetylacetonate) and dioctyltin(IV) dilaurate, and also titanium(IV) or zirconium(IV) or aluminum(III) or zinc(II) complexes, especially with alkoxy, carboxylate, 1,3-diketonate, 1,3-ketoesterate or 1,3-ketoamidate ligands.

Suitable basic nitrogen or phosphorus compounds are especially imidazoles, pyridines, phosphazene bases, secondary or tertiary amines, hexahydrotriazines, biguanides, guanidines, or amidines.

Nitrogen-containing compounds suitable as catalysts **C** are in particular amines, especially N-ethyl-diisopropylamine, N,N,N',N'-tetramethylalkylenediamines, 1,4-diazabicyclo[2.2.2]octane; amidines such as especially 1,8-diazabicyclo[5.4.0]undec-7-ene (DBU), 1,5-diazabicyclo[4.3.0]non-5-ene (DBN), 6-dibutylamino1,8-diazabicyclo-[5.4.0]undec-7-ene; and guanidines such as especially tetramethylguanidine, 2-guanidino-benzimidazole, acetylacetone-guanidine, 3-di-o-tolyl-guanidine, 2-tert-butyl-1,1,3,3-tetramethyl guanidine.

Preferred catalysts **C** are especially organotin(IV) compounds, such as especially dibutyltin diacetate, dibutyltin dilaurate, dibutyltin dichloride, dibutyltin diacetylacetonate, dimethyltin dilaurate, dioctyltin diacetate, dioctyltin dilaurate or dioctyltin diacetylacetonate, complexes of bismuth(III) or zirconium(IV), especially with ligands selected from alkoxides, carboxylates, 1,3-diketonates, oxinate, 1,3-ketoesterates and 1,3-ketoamidates, or compounds containing tertiary amino groups, such as especially 2,2'-dimorpholinodiethyl ether (DMDEE). Also especially suitable are combinations of different catalysts.

In preferred embodiments of the curable composition according to the present invention, the composition comprises between 0.001 to 1 wt.-%, preferably 0.01 to 0.5 wt.-%, most preferably 0.01 to 0.1 wt.-% of said catalyst **C,** based on the total composition.

Preferably, the curable composition according to the invention additionally comprises at least one adhesion promoter **AP.**

Preferably, the adhesion promoter **AP** comprises or consists of an aminosilane and/or at least one organic compound containing a tertiary amino group, an amidine group, or a guanidine group as catalyst or as co-catalyst together with a metal-based catalyst. Preferably, the adhesion promoter is N-(2-aminoethyl)-3-aminopropyltrimethoxysilane.

If required, the substrates can be pretreated prior to the application of the composition, especially by chemical and/or physical cleaning methods or by the application of an adhesion promoter or an adhesion promoter solution. In general, it is not required to pre-treat the surfaces prior to application of the composition. The composition shows in preferred embodiments sufficient adhesion, but can be easily removed by pulling, which makes it ideal for application in re-cyclable electronic equipment.

Other organosilanes have co-catalytic activity, in particular aminosilanes such as 3-aminopropyl trimethoxysilane, and/or they act as adhesion promotors, such as 3-glycidoxypropyl trimethoxysilane.

Preferred monomeric or oligomeric aminofunctional alkoxysilanes include N-(n-Butyl)-3-aminopropyltrimethoxysilane, 3-aminopropyltrimethoxysilane, 3-aminopropyldimethoxymethyl-silane, N-(2-aminoethyl)-3-aminopropyltrimethoxysilane, N-(2-aminoethyl)-3-aminopropyldimethoxymethylsilane, N-(2-aminoethyl)-N'-[3-(trimethoxysilyl)-propyl]ethylenediamine, preferably N-(2-aminoethyl)-3-aminopropyltrimethoxysilane, and oligomers obtained from the condensation of the mentioned aminosilanes, optionally oligomerized together with alkylalkoxysilanes, in particular methyltrimethoxysilane, ethyltrimethoxysilane, propyltrimethoxysilane, vinyltrimethoxysilane, n-butyltrimethoxysilane, isobutyltrimethoxysilane, phenyltrimethoxysilane, and octyltrimethoxysilane.

In preferred embodiments of the curable composition according to the present invention, the composition comprises between 0 to 2 wt.-%, preferably 0.1 to 2 wt.-%, most preferably 0.1 to 1 wt.-% of said adhesion promoter **AP,** based on the total composition.

Preferably, the curable composition according to the invention comprises at least one drying agent **DA** comprising or consisting of an organosilane, preferably vinyl trimethoxysilane.

Preferred organosilanes acting as desiccants or drying agents are in particular tetraethoxysilane, vinyltrimethoxysilane, vinyltriethoxysilane, propyltrimethoxysilane, or organoalkoxysilanes having a functional group in the α-position to the silane group, especially N-(methyldimethoxysilylmethyl)-O-methylcarbamate, (methacryloyloxymethyl)silanes, and methoxymethylsilanes

In preferred embodiments of the curable composition according to the present invention, the composition comprises between 0 to 2 wt.-%, preferably 0.1 to 2 wt.-%, most preferably 0.1 to 1 wt.-% of said drying agent **DA,** based on the total composition.

In preferred embodiments of the curable composition according to the invention, the composition does not contain polydiorganosiloxanes.

The curable composition according to the invention, characterized in that the cured material possesses excellent thermal conductivity, in particular of ≥ 1.5 W/mK, preferably of ≥ 2.5 W/mK, most preferably of ≥ 3 W/mK or higher, according to ASTM D5470.

In preferred embodiments of the curable composition according to the invention, the composition consists of two individual components **A** and **B** that are stored in separated containers and mixed before or during applications to yield the curable composition,
wherein said component **A** contains polymer **P** and said component **B** contains water;
and all other constituents of the composition may be present in either one or both of the components **A** and **B;**
wherein the mixing ratio of components **A:B** ranges from 1:10 to 10:1.

The mixing ratio of the two components **A:B** ranges from 1:10 to 10:1, preferably from 5:1 to 1:5, most preferably from 2:1 to 1:2.

In a preferred embodiment, the two-component composition is characterized in that said component **A** comprises, based on component **A,**
- 1 - 25 wt.-% of said polymer **P;**
- 70 - 95 wt.-% of said filler **F;**
- 1 - 20 wt.-% of said plasticizer **PL;**
- 0.001 - 1 wt.-% of said catalyst **C;**
- 0 - 2 wt.-% of said adhesion promoter **AP;**
- 0- 2 wt.-% of said drying agent **DA;**
and said component **B** comprises, based on component **B,**
- preferably 70 - 95 wt.-% of at least on of said filler **F;**
- preferably 1 - 15 wt.-% of said plasticizer **PL;**
- preferably 0.1 - 2.5 wt.-% of water;

Another aspect of the invention relates to the use of the curable composition according to the invention to adhesively bond, coat, or seal substrates, characterized in that at least one of the substrates is a battery or an electric or an electronic device.

Yet another aspect of the invention relates to a method for improving the dimensional stability of a battery or an electric or electronic device or parts of it, wherein a curable composition according to invention is introduced into a gap within said battery or electric or electronic device or parts of it to fill partially or fully said gap and subsequently cured.

Another aspect of the invention relates to a manufactured article that was bonded, coated or sealed using a curable composition according to the invention.

### Examples

Adduced hereinafter are working examples which are intended to elucidate the invention described in detail. It will be appreciated that the invention is not restricted to these described working examples.

### Synthesis of P3

Under exclusion of moisture, 963 g polyol Acclaim 12200 N (from Covestro, low monool polyoxypropylene diol, OH number 10.5 mg KOH/g, water content approx. 0.05 wt.-%) and 189 g 3-isocyanatopropyl methyldimethoxysilane were heated to 80°C with constant stirring and left at this temperature until the titrimetically determined content of free isocyanate groups had reached a value of 0.76 % by weight. Subsequently 0.4 g of organobismuth catalyst (Coscat 83 from Vertellus) was added and the mixture was left at 80°C with constant stirring until no more free isocyanate was detected by FT-IR spectroscopy. The silane-functional polymer was cooled to room temperature and stored in the absence of moisture.

### Production of Components

The respective components **A** and **B** of the exemplary two-component compositions E1 to E7 were prepared individually by adding the respective ingredients shown in Tables 2a and 2b to a beaker of a speed mixer (SM) at room temperature. Then each component composition was flushed with N₂ in the beaker and closed. Subsequently the mixture was homogenized with the speed mixer operating at 2'500 rpm for 60 seconds. For curing and testing of the two-component compositions E1 to E7, both components **A** and **B** were mixed in a volume ratio **A:B** of 1:1. After mixing at room temperature, curing started spontaneously.

### Test methods

The **press strength** was measured with a tensiometer (Zwick). The test composition was placed on a metal surface. An aluminum piston with a diameter of about 40 mm diameter was placed on top and the material was compressed to an initial position of 5 mm. The material was then compressed from 5 mm to 0.3 mm with a velocity of about 1 mm/sand the force deflection curve was recorded. The force (N) at 0.5 mm thickness was then recorded in the data table and determined as the press-in force. A material having a low viscosity normally has a press-in force of 700 N or less. A high viscosity material normally has a press-in force greater than 700 N, or about 800 N or more. A material having a low viscosity, and which is suitable as gap filler preferably has a press-in force of about 600 N or less, even more preferably about 500 N or less, and most preferably about 400 N or less.

The **lap shear strength** was measured according to EN 1465. The freshly mixed mixture of the two components was poured in between two e-coat substrates (e-coated steel CG 800) with a 2 mm gap. The ecoated steel substrates were cleaned beforehand with isopropanol. The material was then left for curing for 7 days (at 23°C and 50% r.h.). After 7 days the substrates were pulled apart as defined in the norm test.

The **lap shear deformation** was calculated as the overall shear deformation of the specimen, divided by the gap thickness.

### Compounds used in Compositions

For the experiments, the compounds listed in table 1 were used.

**Table 1: Compounds used for the example compositions.**

| **Name** | **Description** | **Trade name** |
|---|---|---|
| Organic polymer **P1** | Reference Trimethoxysilane STP | Geniosil STP-E15 |
| Organic polymer **P2** | Inventive α-dimethoxysilane STP | Geniosil STP-E10 |
| Organic polymer **P3** | Inventive γ-dimethoxysilane STP | Synthesis see above |
| Thermally conductive Filler **F1** | Aluminium hydroxide | Martinal TM2650 |
| Thermally conductive Filler **F2** | Al₂O₃ | Martoxid TM3310 |
| Plasticizer **PL** | Tris(2-ethylhexyl)phosphate | Disflammol TOF |
| Catalyst **C** | Dibutyltin dilaurate (DBTL) | DBTL |
| Adhesion promoter **AP** | N-(2-aminoethyl)-3-aminopropyltrimethoxysilane | Silquest A-1120 |
| Drying agent **DA** | Vinyl trimethoxysilane (VTMO) | Silquest A-171 |

### Compositions used in Material Tests

The composition of component **A** of the exemplary two-component composition is described in table 2a. The composition of component **B** of the exemplary two-component composition is described in table 2b.

Comparative examples are identified in Tables 2a to 3 by "(Ref.)". Comparative examples representing the current state of the art **E1** (Ref.) to **E3** (Ref.) contain organic polymer **P1** (a Trimethoxysilane STP)

Inventive examples **E4** to **E6** contain organic polymer **P2** (an α-dimethoxysilane STP), while inventive example **E7** contains organic polymer **P3** (a γ-dimethoxysilane STP).

Furthermore, the filler type and amount are varied.

**Table 2a: Composition of component A. Values are in wt.-% totaling 100%.**

| **Component A** | **E1** (Ref.) | **E2** (Ref.) | **E3** (Ref.) | **E4** | **E5** | **E6** | **E7** |
|---|---|---|---|---|---|---|---|
| **P1** | 12 | 10 | 8 | - | - | - | - |
| **P2** | - | - | - | 8 | 10 | 12 | - |
| **P3** | - | - | - | - | - | - | 10 |
| **F1** | 82.2 | 64.2 | 66.2 | 81.2 | 40 | 77.2 | 40 |
| **F2** | - | 20 | 20 | 5 | 44.2 | 5 | 44.2 |
| **Plasticizer** | 5 | 5 | 5 | 5 | 5 | 5 | 5 |
| **Adhesion promoter** | 0.5 | 0.5 | 0.5 | 0.5 | 0.5 | 0.5 | 0.5 |
| **Drying agent** | 0.3 | 0.3 | 0.3 | 0.3 | 0.3 | 0.3 | 0.3 |

**Table 2b: Composition of component B. Values are in wt.-% totaling 100%.**

| **Component B** | **E1** (Ref.) | **E2** (Ref.) | **E3** (Ref.) | **E4** | **E5** | **E6** | **E7** |
|---|---|---|---|---|---|---|---|
| **Water** | 0.4 | 0.4 | 0.4 | 0.4 | 0.4 | 0.4 | 0.4 |
| **F1** | 43.58 | 43.58 | 43.58 | 43.58 | 43.58 | 43.58 | 43.58 |
| **F2** | 50 | 50 | 50 | 50 | 50 | 50 | 50 |
| **Plasticizer** | 6 | 6 | 6 | 6 | 6 | 6 | 6 |
| **Catalyst** | 0.02 | 0.02 | 0.02 | 0.02 | 0.02 | 0.02 | 0.02 |

### Material Tests

The results of the material tests are shown in table 3. It shows that the inventive examples **E4** to **E7** surprisingly perform better than comparative examples **E1** (Ref.) to **E3** (Ref.) in terms of lap shear deformation. Especially **E7** allows for more than 140% deformation, which is significantly more than is common in the current state of the art. The inventive examples can thus effectively accommodate battery breathing.

Furthermore, the inventive examples **E4** to **E7** perform at least similar if not better with respect to the other relevant material properties, such as press strength and lap shear strength, when compared to the comparative examples **E1** (Ref.) to **E3** (Ref.).

All compositions possess excellent thermal conductivity, in particular of ≥ 1.5 W/mK according to ASTM D5470.

**Table 3: Material Tests.**

| **Test results** | **E1** (Ref.) | **E2** (Ref.) | **E3** (Ref.) | **E4** | **E5** | **E6** | **E7** |
|---|---|---|---|---|---|---|---|
| Press strength (N) | 773 | 379 | n.m. | n.m. | n.m. | n.m. | 458 |
| Lap shear strength (MPa) | 1.50 | 1.48 | 1.37 | 1.63 | 2.07 | 1.93 | 1.77 |
| Lap shear deformation (%) | 47 | 65 | 55 | 68 | 90 | 75 | 142 |

## Claims

1. A curable composition comprising
- at least one organic polymer **P** containing reactive silane groups, wherein the reactive silane groups correspond to dialkoxy(alkyl) silanes;
- at least 70 wt.-% of thermally conductive filler **F;**
- at least one plasticizer **PL;**
- at least one catalyst **C;**

2. The curable composition according to claim 1, **characterized in that** the backbone of the organic polymer **P** is a polyether, in particular a polyoxyethylene, polyoxypropylene or polyoxypropylene-polyoxyethylene, a polyurethane, a poly(meth)acrylate or a polybutadiene.

3. The curable composition according to any of claims 1 to 2, **characterized in that** the reactive silane groups of organic polymer **P** correspond to dialkoxy(alkyl) silanes according to formula (I). 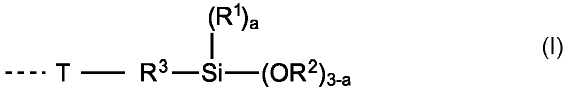 wherein
R¹ is a linear or branched, monovalent hydrocarbyl radical having 1 to 8 carbon atoms, preferably methyl or ethyl, most preferably methyl;
R² is a linear or branched, monovalent hydrocarbyl radical having 1 to 6 carbon atoms, preferably methyl or ethyl or isopropyl, most preferably methyl;
R³ is a linear or branched divalent hydrocarbyl radical which has 1 to 12 carbon atoms and optionally has cyclic and/or aromatic moieties and optionally one or more heteroatoms, especially one or more nitrogen atoms, preferably methyl or ethyl or propyl, most preferably propyl;
T is a divalent radical selected from -O-, -S-, -N(R⁵)-, -O-CO-N(R⁵)-, - N(R⁵)-CO-O- and N(R⁵)-CO-N(R⁵)- ;
Wherein R⁵ is a hydrogen radical or linear or branched hydrocarbyl radical which has 1 to 20 carbon atoms and optionally has cyclic moieties, and which optionally has an alkoxysilane, ether or carboxylic ester group;
a has a value of 1.

4. The curable composition according to any of claims 1 to 3, **characterized in that** the thermally condutctive filler **F** comprises or consists of aluminium oxide, aluminium hydroxide, boron nitride, aluminium nitride, zinc oxide, magnesium oxide, magnesium hydroxide and any mixture of these fillers.

5. The curable composition according to any of claims 1 to 4, **characterized in that** the thermally conductive filler **F** comprises or consists of multimodal aluminium hydroxide, preferably having a hydrophobic coating.

6. The curable composition according to any of claims 1 to 5, **characterized in that** the plasticizer **PL** comprises or consists of a reactive diluent and/or trialkyl and/or triaryl phosphate, preferably tris-(2-ethylhexyl)-phosphate.

7. The curable composition according to any of claims 1 to 6, **characterized in that** the catalyst **C** is a metal compound and/or a basic nitrogen and/or phosphorus compound, preferably organotin(IV) compounds.

8. The curable composition according to any of claims 1 to 7, **characterized in that** the curable composition additionally comprises at least one adhesion promoter **AP** comprising or consisting of an aminosilane and/or at least one organic compound containing a tertiary amino group, an amidine group, or a guanidine group as catalyst or as co-catlayst together with a metal-based catalyst, most preferably N-(2-aminoethyl)-3-aminopropyltrimethoxysilane.

9. The curable composition according to any of claims 1 to 8, **characterized in that** the curable composition additionally comprises at least one drying agent **DA** comprising or consisting of an organosilane, preferably vinyltrimethoxy silane.

10. The curable composition according to any of claims 1 to 9, **characterized in that** the cured material possesses excellent thermal conductivity, in particular of ≥ 1.5 W/mK, preferably of ≥ 2.5 W/mK, most preferably of ≥ 3 W/mK or higher, according to ASTM D5470.

11. The curable composition according to any of claims 1 to 10, **characterized in that** the composition consists of two individual components **A** and **B** that are stored in separated containers and mixed before or during applications to yield the curable composition,
wherein said component **A** comprises polymer **P** and said component **B** comprises water;
and all other constituents of the composition may be present in either one or both of the components **A** and **B;**
wherein the mixing ratio of components **A:B** ranges from 1:10 to 10:1.

12. The two-component composition as claimed in claim 11, **characterized in that** said component **A** comprises, based on component **A,**
- 1 - 25 wt.-% of said polymer **P;**
- 70 - 95 wt.-% of said filler **F;**
- 1 - 20 wt.-% of said plasticizer **PL;**
- 0.001 - 1 wt.-% of said catalyst **C;**
- 0 - 2 wt.-% of said adhesion promoter **AP;**
- 0- 2 wt.-% of said drying agent **DA;**
and said component **B** comprises, based on component **B,**
- preferably 70 - 95 wt.-% of at least on of said filler **F;**
- preferably 1 - 15 wt.-% of said plasticizer **PL;**
- preferably 0.1 - 2.5 wt.-% of water;

13. Use of the curable composition according to any of claims 1 to 12 to adhesively bond, coat, or seal substrates, **characterized in that** at least one of the substrates is a battery or an electric or an electronic device.

14. A method for improving the dimensional stability of a battery or an electric or electronic device, wherein a curable composition according to any of claims 1 to 12 is introduced into a gap within said battery or electric or electronic device or parts of it to fill partially or fully said gap and subsequently cured.

15. A manufactured article that was bonded, coated or sealed using a two-component composition according to any claims of 1 to 12.
